# EUROPEAN PATENT APPLICATION

(11) **EP 4 656 784 A1**
(43) Date of publication of application: **03.12.2025**
(21) Application number: 25158372.0
(22) Date of filing: 17.02.2025
(51) Int. Cl.: D03D 11/00, B29B 11/16, B29C 70/22, D03D 25/00, D03D 41/00

(54) **METHOD OF MANUFACTURING A WOVEN FABRIC FOR A COMPOSITE COMPONENT**

(30) Priority: 30.05.2024 US 202418678274
(71) Applicant: General Electric Company, Evendale, Ohio 45215 (US)
(72) Inventor: GILBERT, Aaron, Lynn, 01910 (US); XIE, Ming, Evendale, 45215 (US); BAXTER, Kristin Lynn Bolte, Evendale, 45215 (US); BOYER, Mitchell, Evendale, 45215 (US)
(74) Representative: Openshaw & Co.

(57) **Abstract**

A method of manufacturing a woven fabric (400, 500, 602, 604, 700) for a composite component for a turbine engine (100). The method includes arranging a plurality of warp fiber tows (210) to extend in the warp direction. The plurality of warp fiber tows (210) is arranged in a thickness direction to form a plurality of warp fiber layers (212) and is arranged in a weft direction to form a plurality of warp fiber columns (214). The method also includes weaving the plurality of weft fiber tows (220) with the plurality of warp fiber tows (210). The plurality of weft fiber tows (220) includes a multi-layer weft fiber tow (410, 652, 654, 674, 710). The multi-layer weft fiber tow (410, 652, 654, 674, 710) is woven with a multi-layer portion (412, 616, 626, 712) that extends two or more warp fiber layers (212) of the plurality of warp fiber layers (212).

## Description

### GOVERNMENT INTEREST

This invention was made with United States Government support. The United States Government may have certain rights in the invention.

### TECHNICAL FIELD

The present disclosure relates to three-dimensional woven fabrics and methods of forming the woven fabrics, particularly, woven fabrics used in composite components for aircraft engines.

### BACKGROUND

Turbine engines used in aircraft generally include a fan and a turbo-engine section arranged in flow communication with one another. A combustor is arranged in the turbo-engine to generate combustion gases for driving a turbine in the turbo-engine of the turbine engine, and the turbine may be used to drive the fan. A portion of air flowing into the fan flows through the turbo-engine as core air, and another portion of the air flowing into the fan bypasses the core section and flows through the turbine engine as bypass air. The turbo-engine section may include one or more compressors to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional view of a turbine engine of for an aircraft.
FIG. 2A is a schematic view of a three-dimensional fiber weave pattern.
FIG. 2B is a schematic, cross-sectional view of the fiber weave pattern shown in FIG. 2A taken along line 2B-2B in FIG. 2A.
FIG. 2C is a schematic, cross-sectional view of a fiber weave pattern shown similar to fiber weave pattern shown in FIG. 2A, but with a different interlocking fiber pattern.
FIG. 2D is a schematic, cross-sectional view of a fiber weave pattern shown similar to fiber weave pattern shown in FIG. 2A, but with another interlocking fiber pattern.
FIG. 3 is a flow chart of a general process for manufacturing a composite component that may be used in the turbine engine of FIG. 1.
FIG. 4 is a schematic cross-sectional view, taken along line 4-4 in FIG. 1, of an airfoil that may be used in the turbine engine shown in FIG. 1.
FIG. 5 is a schematic, cross-sectional view of a woven fabric that may be used to form the airfoil shown in FIG. 4.
FIGS. 6A to 6G are schematics views illustrating steps of weaving a weft fiber to from the woven fabric shown in FIG. 5.
FIG. 7 is a schematic view of another woven fabric having an alternate weft fiber weave pattern that may be used to form the airfoil shown in FIG. 4.
FIGS. 8A to 8C are schematic views of additional woven fabrics having alternate weft fiber weave patterns that may be used to form the airfoil shown in FIG. 4.
FIG. 9 is a schematic view of another woven fabric having an alternate weft fiber weave pattern that may be used to form the airfoil shown in FIG. 4.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The singular forms "a," "an," and "the" include plural references unless the context clearly dictates otherwise.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), and a metal matrix composite (MMC). The composite may be formed of a matrix material and a reinforcing element, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle.

"Preform" as used herein is a piece of three-dimensional woven fabric formed by a plurality of reinforcing fibers including warp fiber tows and weft fiber tows.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. The adhesive can require curing at elevated temperatures or other hardening techniques.

As used herein, PMC refers to a class of materials. The PMC material may be a prepreg. A prepreg is a reinforcement material (e.g., a reinforcing fiber) pre-impregnated with a polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven fabric. Woven fabrics can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods, including but not limited to melt infiltration, chemical vapor infiltration, polymer impregnation pyrolysis (PIP), or any combination thereof.

The term "metallic" as used herein is indicative of a material that includes metal such as, but not limited to, titanium, iron, aluminum, stainless steel, and nickel alloys. A metallic material or a metal alloy can be a combination of at least two or more elements or materials, where at least one is a metal.

As noted above, certain components of gas turbine engines, particularly, those used in aircraft, may be made from composite materials. Such components include, for example, various airfoils such as fan blades or outlet guide vanes. Traditional two-dimensional (2D) layup designs typically used for forming composite gas turbine engine components are challenging to manufacture and may have limited interlaminar strength. Specifically, composite components for gas turbine engines are generally constructed with hand laid plies or by combining multiple woven or prefabricated preforms into one molded part. Hand layup or assembly of preforms increases the labor and the costs required to build the component. Assembly of preforms also comes with assembly and positioning challenges. Moreover, a composite component formed from two-dimensional (2D) plies or multiple preforms will be more likely to have limited interlaminar loading capability.

The embodiments discussed herein disclose methods of forming a three-dimensional (3D) woven fabric. Three-dimensional (3D) woven fabrics include interlocking fiber tows that are typically additional warp fiber tows that are directed through the thickness of the woven fabric during weaving to stitch the reinforcing fiber tows of the woven fabrics together. Such interlocking fiber tows provide the composite formed with the woven fabric increased interlaminar loading capability as compared to, for example, composites formed from two-dimensional (2D) plies. The embodiments discussed herein are three-dimensional (3D) woven fabrics that have an even greater interlaminar loading capability resulting from the way the weft fiber tows are woven. More specifically, the woven fabrics discussed herein include weft fiber tows that are woven to pass through multiple warp fiber layers. These woven fibers may be particularly used in composite components that are subject to impact loading conditions, such as the leading edges of the airfoils in a turbine engine that may be subjected to impacts from foreign objects, such as bird strikes or ingestion.

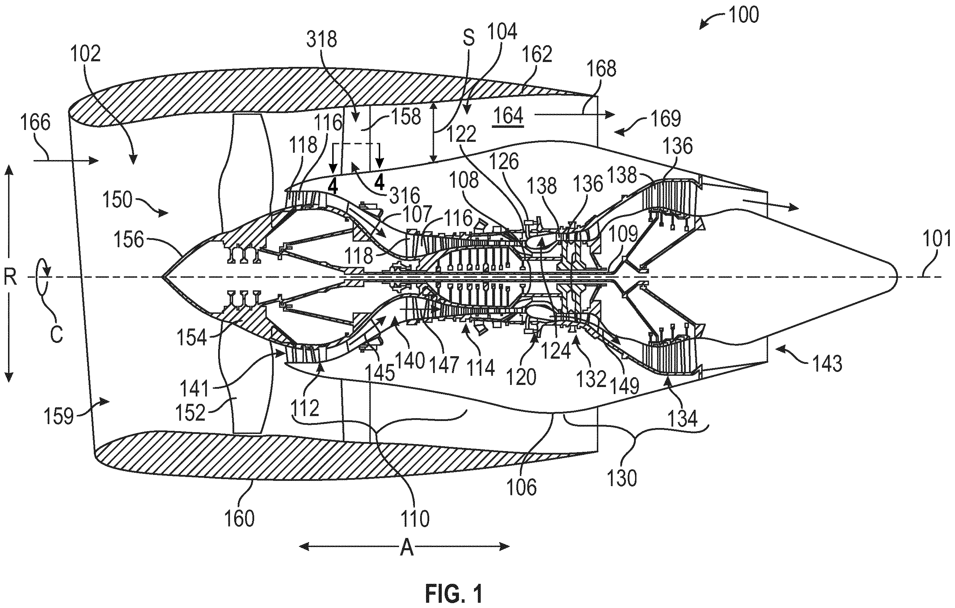

The composite materials discussed herein may be particularly suitable for use in turbine engines for aircraft. FIG. 1 is a schematic, cross-sectional view a turbine engine 100 that may be used on an aircraft. The turbine engine 100 has an axial direction A (extending parallel to a longitudinal centerline axis 101, shown for reference in FIG. 1), a radial direction R, and a circumferential direction C. The circumferential direction C extends in a direction rotating about the longitudinal centerline axis 101 (the axial direction A). In the embodiment depicted in FIG. 1, the turbine engine 100 is a high bypass turbofan engine, including a fan section 102 and a turbo-engine 104 disposed downstream from the fan section 102.

The turbo-engine 104 depicted in FIG. 1 includes in serial flow relationship, a compressor section 110, a combustion section 120, and a turbine section 130. The turbo-engine 104 is substantially enclosed within an outer casing 106 that is substantially tubular and defines a core inlet 141. In this embodiment, the core inlet 141 is annular. As schematically shown in FIG. 1, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbo-engine 104 includes a high-pressure (HP) shaft 108 or a HP spool, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 may include a plurality of compressor stages. In each stage, a plurality of compressor blades 116 rotate relative to a corresponding plurality of static compressor vanes 118 (also called nozzles) to compress or to pressurize the core air 145 passing through the stage. In a single compressor stage, the plurality of compressor blades 116 can be provided in a ring, extending radially outwardly relative to the longitudinal centerline axis 101 from a blade platform to a blade tip (e.g., extend in the radial direction R). The compressor blades 116 may be a part of a compressor rotor that includes a disk and the plurality of compressor blades 116 extend radially from the disk. Other configurations of the compressor rotor may be used, including, for example, blisks where the disk and the compressor blades 116 are integrally formed with each other to be a single piece. The corresponding static compressor vanes 118 are positioned upstream of and adjacent to the rotating compressor blades 116. The compressor vanes 118 for a stage of the compressor can be mounted to a core casing 107 in a circumferential arrangement. The core casing 107 may define, at least in part, the core air flow path 140. Each compressor stage may be used to sequentially compress the core air 145 flowing through the core air flow path 140, generating compressed air 147. Any suitable number of compressor blades 116, compressor vanes 118, and compressor stages may be used.

Each of the HP turbine 132 and the LP turbine 134 also may include a plurality of turbine stages. In each stage, a plurality of turbine blades 136 rotate relative to a corresponding plurality of static turbine vanes 138 (also called a nozzle) to extract energy from combustion gases 149 passing through the stage. The turbine blades 136 may be a part of a turbine rotor. Any suitable configuration for a turbine rotor may be used, including, for example, a disk with the plurality of turbine blades 136 extending from the disk. The corresponding static turbine vanes 138 are positioned upstream of and adjacent to the rotating turbine blades 136. The turbine vanes 138 for a stage of the turbine can be mounted to the core casing 107 in a circumferential arrangement.

In the combustion section 120, fuel, received from a fuel system (not shown), is injected into a combustion chamber 124 of a combustor 122 by fuel nozzles 126. The fuel is mixed with the compressed air 147 from the compressor section 110 to form a fuel and air mixture, and combusted, generating combustion products (i.e., combustion gases 149). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft. The combustion gases 149 are discharged from the combustion chamber 124. These combustion gases may be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The turbine engine 100 and, more specifically, the turbo-engine 104 further includes one or more drive shafts. As noted above, the turbo-engine 104 includes the high-pressure (HP) shaft 108 drivingly connecting the HP turbine 132 to the HP compressor 114, and the low-pressure (LP) shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of thermal energy or kinetic energy from the combustion gases 149 is extracted via the one or more stages of the turbine blades 136 and turbine vanes 138 of the HP turbine 132. This causes the HP shaft 108 to rotate, which supports operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the thermal energy or the kinetic energy is extracted from the combustion gases 149 via one or more stages of the turbine blades 136 and the turbine vanes 138 of the LP turbine 134. This causes the LP shaft 109 to rotate, which supports operation of the LP compressor 112 (self-sustaining cycle), and rotating the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the compressor rotors and the turbine rotors.

The fan section 102 shown in FIG. 1 includes a fan 150 having a plurality of fan blades 152 coupled to a disk 154. The fan blades 152 and the disk 154 are rotatable, together, about the longitudinal centerline (axis) 101 by the LP shaft 109. The LP compressor 112 may also be directly driven by the LP shaft 109, as depicted in FIG. 1. The disk 154 is covered by a fan hub 156 aerodynamically contoured to promote an airflow through the plurality of fan blades 152. Further, a nacelle 160 circumferentially surrounds the fan 150, and in the depicted embodiment, at least a portion of the turbo-engine 104. The nacelle 160 may also be referred to as an annular fan casing or an outer nacelle. The nacelle 160 is supported relative to the turbo-engine 104 and, more specifically, the outer casing 106 by a plurality of outlet guide vanes 158 that are circumferentially spaced about the nacelle 160 and the turbo-engine 104. A downstream section 162 of the nacelle 160 extends over an outer portion of the turbo-engine 104 and, more specifically, the outer casing 106 so as to define a bypass airflow passage 164 therebetween.

During operation of the turbine engine 100, a volume of air 166 enters the turbine engine 100 through an inlet of the nacelle 160 and/or the fan section 102 (referred to herein as an engine inlet 159). As the volume of air 166 passes across the fan blades 152, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as other suitable numbers or arrangements of shafts, compressors, turbines, fans, etc. Further, although the turbine engine 100 is shown as a direct drive, fixed-pitch turbofan engine, in other embodiments, the turbine engine 100 may be a geared turbine engine (e.g., including a gearbox between the fan 150 and a shaft driving the fan, such as the LP shaft 109), may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

The turbine engine 100 discussed herein is suitable for use on aircraft. Suitable aircraft include, for example, airplanes, helicopters, and unmanned aerial vehicles (UAV). In other embodiments, the turbine engine may be any other turbine engines, such as an industrial turbine engine incorporated into a power generation system, a nautical turbine engine on a ship or other vessel.

Various components of the turbine engine 100 may be formed from composite materials. These components are referred to herein as composite components. The fan blades 152, the outlet guide vanes 158, compressor blades 116, and compressor vanes 118 may be made from PMC materials, for example. Other composites, such as CMC materials, may be used for other components, including, for example, turbine blades 136, turbine vanes 138, and components of the combustion section 120 such as combustor liners used to form the combustion chamber 124. Moreover, although the embodiments are described relative to a turbine engine 100, the composite component and methods of manufacturing may be used to form composite components used in applications beyond turbine engines.

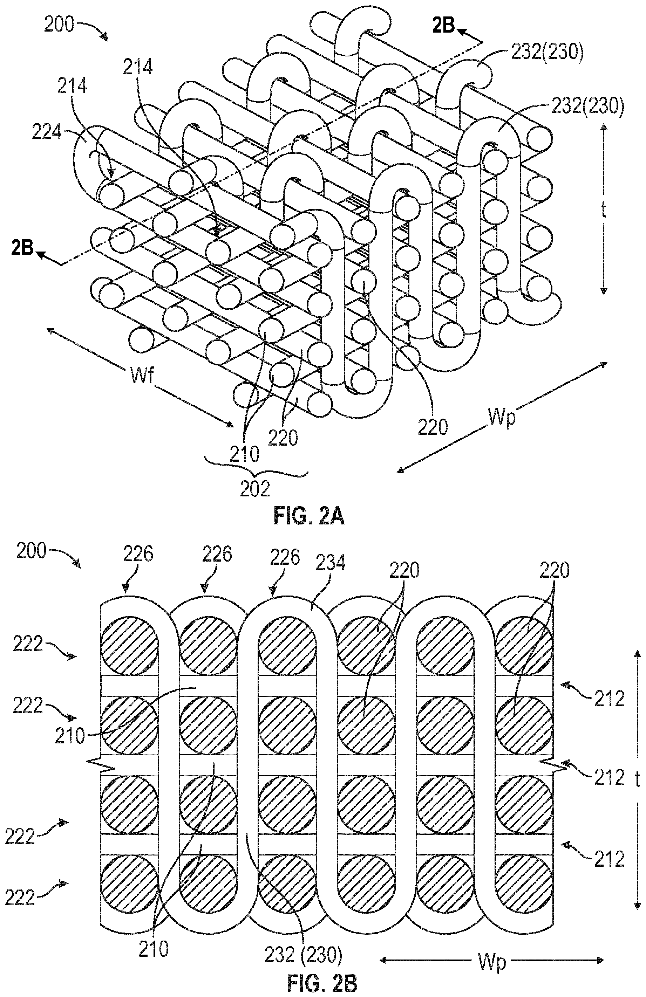

FIGS. 2A and 2B are schematics showing a three-dimensional fiber weave pattern that may be used to form a woven fabric 200. FIG. 2B is a cross-sectional view taken along line B-B in FIG. 2A. In embodiments discussed herein, the composite components may be formed from a plurality of reinforcing fibers and, more specifically a plurality of reinforcing fiber tows 202. The plurality of reinforcing fiber tows 202 are woven together to form the woven fabric 200. The plurality of reinforcing fiber tows 202 includes a plurality of first fiber tows, which in this embodiment is a plurality of warp fiber tows 210. The plurality of reinforcing fiber tows 202 also includes a plurality of second fiber tows, which in this embodiment is a plurality of weft fiber tows 220. The weft fiber tows 220 are oriented transversely to the warp fiber tows 210, and in the depicted embodiment, the warp fiber tows 210 and the weft fiber tows 220 are oriented generally orthogonally to each other. The woven fabric 200 thus includes a warp direction Wp (also referred to as a first direction) and a weft direction Wf (also referred to as a second direction). The warp fiber tows 210 extend in the warp direction Wp and the weft fiber tows 220 extend in the weft direction Wf.

In the depicted embodiment, the woven fabric 200 is a three-dimensional woven fabric and the woven fabric 200 also includes a thickness direction t. The thickness direction may also be referred to as a z direction. The warp fiber tows 210 may be arranged relative to each other to form a plurality of warp fiber layers 212 in the thickness direction t and to form a plurality of warp fiber columns 214 in the weft direction Wf. Three warp fiber layers 212 are depicted in FIGS. 2A and 2B, but the woven fabric 200 may include any other numbers of warp fiber layers 212, including more than three warp fiber layers 212.

During a weaving process, the warp fiber tows 210 may be held in tension in the warp direction Wp, and one of the weft fiber tows 220 is passed or drawn therethrough. A shuttle (not shown) may be used to draw the one of the weft fiber tows 220 through the warp fiber tows 210. The shuttle may be passed through the warp fiber tows 210 in a first direction and then reversed to pass through the warp fiber tows 210 at a different height in the thickness direction forming a plurality of weft fiber layers 222 in the thickness direction t. One of the weft fiber tows 220 may be continuous through at least a portion of the thickness of the woven fabric 200, and the one of the weft fiber tows 220 may include a portion extending in the thickness direction t, which may be referred to in some embodiments as a turnaround. This portion of the weft fiber tow thus may be referred to herein as a turnaround portion 224. The warp fiber tows 210 may be moved relative to each other to allow a space for the one of the weft fiber tows 220 to pass through the space. The warp fiber tows 210 may be moved relative to each other in different ways to create different patterns. In this way, weaving the woven fabric 200 includes positioning the warp fiber tows 210 (e.g., such that the warp fiber tows 210 are held stationary in tension), then laying the weft fiber tows 220 (e.g., such that the weft fiber tows 220 are drawn through and inserted over and under the corresponding warp fibers 210), and repeating this process until the woven fabric 200 is formed. The weft fiber tows 220 may be arranged relative to each other to form the plurality of weft fiber layers 222 in the thickness direction t and to form a plurality of weft fiber columns 226 in the warp direction Wp.

The woven fabric 200 also includes a plurality of interlocking fiber tows 230 (also referred to as Z-weaver fiber tows). The interlocking fiber tows 230 are additional warp fiber tows that are directed through the thickness of the woven fabric 200 during weaving to stitch the reinforcing fiber tows 202 together. The interlocking fiber tows 230 are woven to extend between two or more of the weft fiber layers 222. Different fiber patterns may be used for the interlocking fiber tows 230. A first interlocking fiber pattern, shown in FIGS. 2A and 2B, is an orthogonal interlocking pattern and the interlocking fiber tows 230 are referred to herein as orthogonal interlocking fiber tows 232. In this pattern, the orthogonal interlocking fiber tows 232 extend substantially in a direction that is orthogonal to the warp direction Wp, which is the thickness direction t in the depicted embodiment. As with the weft fiber tows 220, the interlocking fiber tows 230 (e.g., the orthogonal interlocking fiber tows 232) may include a turnaround portion 234. In the depicted embodiment, the turnaround portion 234 of the orthogonal interlocking fiber tows 232 is positioned to form an alternating pattern between each warp fiber columns 214. In the depicted embodiment, the orthogonal interlocking fiber tows 232 extend through the thickness of the woven fabric 200 and may be referred to as through-thickness interlocking fiber tows, but other thicknesses may be used.

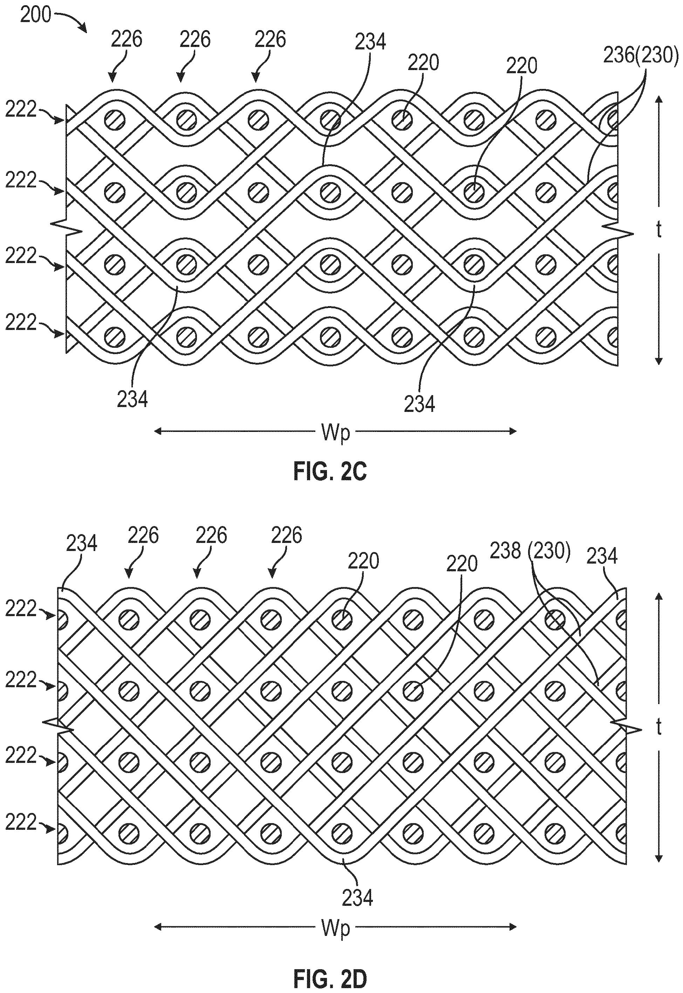

A second interlocking fiber pattern, shown in FIG. 2C, is an angle interlock pattern and, more specifically, a layer-to-layer angle interlock pattern. FIG. 2C is a cross-sectional view of a woven fabric taken from a perspective similar to FIG. 2B. The interlocking fiber tows 230 are referred to in this embodiment as angled interlocking fiber tows 236. Instead of extending orthogonally through the woven fabric 200, the angled interlocking fiber tows 236 form an oblique angle relative to the warp direction Wp. In the depicted embodiment, the angled interlocking fiber tows 236 extend through adjacent weft fiber layers 222 in an alternating or a sinusoidal pattern to interlock these adjacent layers with each other, with the oblique angle formed between adjacent turnaround portions 234 of the angled interlocking fiber tows 236. The turnaround portions 234 of the angled interlocking fiber tows 236 are located on every other weft fiber columns 226, but, in other embodiments, two or more weft fiber columns 226 may be between adjacent turnaround portions 234 of the angled interlocking fiber tows 236. In other embodiments, the angled interlocking fiber tows 236 may extend through more than two adjacent weft fiber layers 222. For example, as shown in FIG. 2D, the interlocking fiber tows 230 are through-thickness interlocking fiber tows, which are referred to herein as through-thickness angled interlocking fiber tows 238. FIG. 2D is a cross-sectional view of a woven fabric taken from a perspective similar to FIG. 2B. The weft fiber tows 220 are omitted in FIGS. 2C and 2D for clarity.

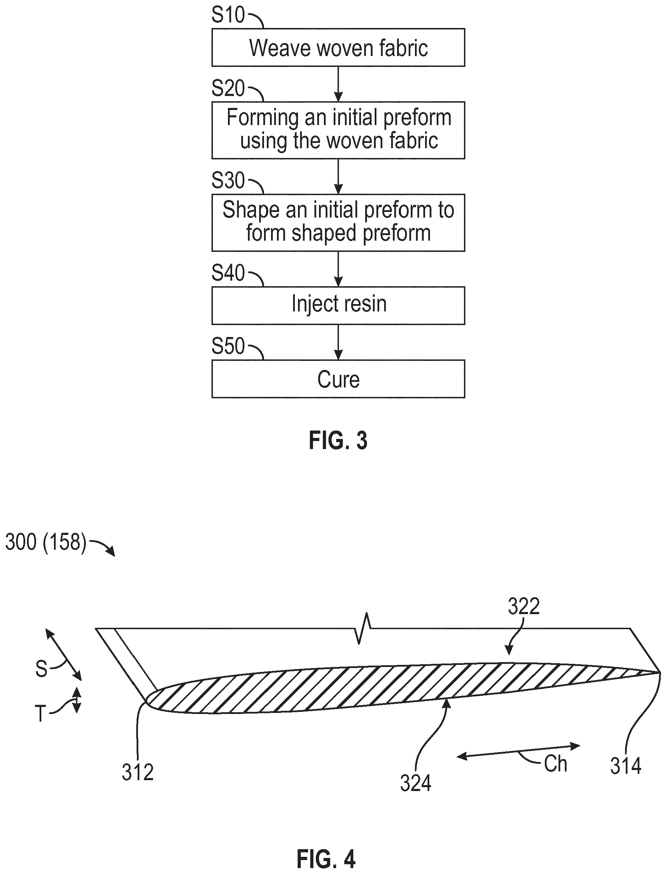

FIG. 3 is a flow chart of a general process of manufacturing a composite component that may be used in the turbine engine of FIG. 1. The method includes, in step S10 weaving the woven fabric 200, such as on a loom. In step S20, the method includes forming an initial preform using one or more pieces of woven fabric 200. This step may include, for example, laying up a plurality of woven fabrics 200 or otherwise positioning the plurality of woven fabrics 200 relative to each other to form the initial preform. In step S30, the initial preform is shaped to form a shaped preform. Shaping the initial preform may include, for example, using a mold tool to shape the initial preform. Suitable shaping processes may include vacuum forming or other forming processes to impart a shape to the initial preform. The shaped preform may form a final preform, but optionally, additional machining processes and manufacturing processes, such as adding inserts, may be carried out on the shaped preform to form the final preform.

After the preform is complete (i.e., the final preform), a matrix material may be injected into the preform in step S40 to generate an infiltrated (or an impregnated) preform. When the composite component is a polymer matrix composite, polymers and/or a resin may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes may be used in this step depending upon the matrix material. As noted above, the preform may be formed using prepreg fiber tows to introduce a matrix material, and, in such an embodiment, this step (step S40) may be omitted.

The method continues with curing the infiltrated preform in step S50 to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material.

Further, the composite component may be finish machined as needed. Finish machining may define the final finished shape or contour of the composite component. For example, when the composite component is a fan blade 152 (FIG. 1), the edges of the fan blade 152 may be machined to define the final shape or the contour of the airfoil. Additionally, the composite component can be coated with one or more suitable coatings, such as, e.g., an environmental barrier coating (EBC) or a polyurethane surface coating.

FIG. 4 is a schematic cross-sectional view of a composite component that may be used in the turbine engine 100 (FIG. 1). As noted above, various components of the turbine engine 100 may be composite components formed from composite materials, and, in particular, a preform formed of one or more woven fabrics 200 (FIG. 2A). As depicted in FIG. 4, the composite component is an airfoil 300. More specifically, the airfoil 300 shown in FIG. 4 is an outlet guide vane 158, and FIG. 4 is a three-dimensional cross-sectional view of the outlet guide vane 158 taken along line 4-4 in FIG. 1. The description of the airfoil 300, however, applies to the other airfoils of the turbine engine 100, including, for example, the compressor vanes 118 (FIG. 1). These static airfoils 300 may also be referred to as struts and the methods discussed herein may be used for other composite struts located outside of air flow paths.

The airfoil 300 includes a leading edge 312, a trailing edge 314, an inner end portion 316 (FIG. 1), and an outer end portion 318 (FIG. 1). The inner end portion 316 and the outer end portion 318 may each be connected to a case defining the air flow passage in which the airfoil 300 is located. As shown in FIG. 1, in this example, when the airfoil 300 is the outlet guide vane 158, the airfoil 300 is connected on the inner end portion 316 to the outer casing 106 and the outer end portion 318 is connected to the nacelle 160. The airfoil 300 extends outwardly in a radial direction from the inner end portion 316 to the outer end portion 318. This direction may also be referred to as the spanwise direction S. Referring back to FIG. 4, the airfoil 300 includes surfaces formed on each side of the airfoil between the leading edge 312 and the trailing edge 314. These surfaces are a first surface 322 and a second surface 324 positioned on opposite sides of the airfoil 300. As can be seen in FIG. 4, the airfoil 300 is a symmetric airfoil. The airfoil 300 may have any suitable shape, however, including, for example, concave surfaces, and the airfoil 300 may be a cambered airfoil with the first surface 322 being a suction surface having a convex curvature and the second surface 324 being a pressure surface that is generally flat. The airfoil 300 also includes a chordwise direction Ch, perpendicular to the spanwise direction S and extending from the leading edge 312 to the trailing edge 314. A thickness direction T of the airfoil 300 is also perpendicular to each of the spanwise direction S and the chordwise direction Ch. The airfoil 300 is a composite component comprised of a matrix material formed around the reinforcing fiber tows 202 (FIG. 2A). The composite material may be, for example, a polymer matrix composite (PMC). The methods discussed herein may be used with other materials and, thus, the airfoil 300 may be formed from these other materials and the airfoil 300 may be a ceramic matrix composite (CMC). The reinforcing fiber tows 202 are omitted in FIG. 4 for clarity.

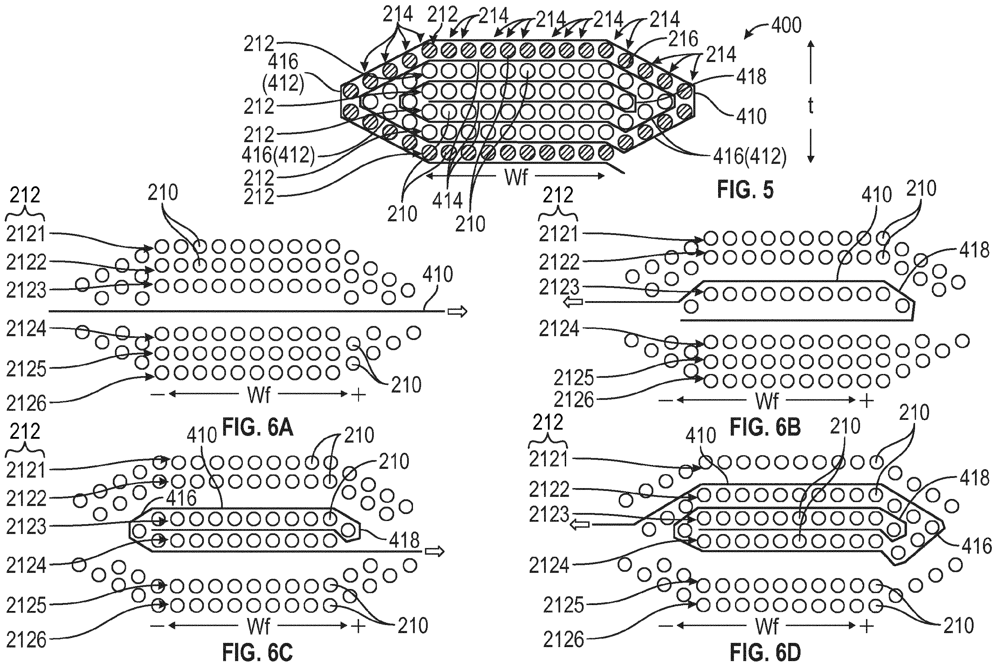

FIG. 5 is a schematic view of a woven fabric 400 that may be used to form the airfoil 300 shown in FIG. 4. The woven fabric 400 shown in FIG. 5 may be formed similarly to the woven fabric 200 discussed above with reference to FIGS. 2A to 2D, and that discussion applies here. The interlocking fiber tows 230 (FIGS. 2A to 2D ) are omitted from FIG. 5 for clarity. More specifically, in step S10 (FIG. 3), the warp fiber tows 210 are arranged to extend in the warp direction Wp (FIG. 2A), which, in FIG. 5, is in and out of the page. In weaving the warp fiber tows 210, the warp fiber tows 210 are also arranged in the thickness direction t to form the warp fiber layers 212 and are arranged in the weft direction Wf to form the warp fiber columns 214. The warp fiber tows 210 also are arranged to have an outer perimeter layer 216 of warp fiber tows 210. The warp fiber tows 210 in the outer perimeter layer 216 are shown in FIG. 5 with solid-line cross-hatching.

In the woven fabric 200 shown above in FIG. 2A, the weft fiber tows 220 may be woven to have a single-layer alternating pattern. More specifically, in the single-layer alternating pattern, one of the weft fiber tows 220 is directed through the warp fiber tows 210 in the weft direction Wf and then reversed to pass through the warp fiber tows 210 at a different height, one warp fiber layer 212 above or below the previous pass, forming a turnaround portion 224 and, more specifically, as single-layer turnaround portion, as will be discussed further below. While the woven fabric 400 may include warp fiber tows 210 woven in the single-layer alternating pattern, the warp fiber tows 210 also include one or more multi-layer weft fiber tows 410, as shown in FIG. 5. The multi-layer weft fiber tow 410 is one of the plurality of warp fiber tows 210, but is woven to have at least one multi-layer portion 412. The multi-layer portion 412 is a portion of the multi-layer weft fiber tow 410 that extends, in the thickness direction t, two or more warp fiber layers 212. The multi-layer weft fiber tow 410 also includes one or more weft direction portions 414 that each extends in the weft direction at one elevation relative to the warp fiber layers 212.

Weaving the multi-layer weft fiber tow 410 with the multi-layer portion 412 helps to bind together the warp fiber layers 212 around which the multi-layer weft fiber tow 410 is woven, increasing the interlaminar strength of the woven fabric 400 and resulting composite component, such as the airfoil 300 (FIG. 3). As noted above, the interlocking fiber tows 230 (FIG. 2B) may be woven in the warp direction, and the multi-layer weft fiber tow 410 may be in addition to these interlocking fiber tows 230. The woven fabric 400 depicted in FIG. 5 is near net shape, and, thus, the warp fiber tows 210 are arranged to have a shape and a size that correspond to the shape of the composite component, such as the airfoil 300 (FIG. 3). The multi-layer weft fiber tow 410 may be woven to circumscribe the outer perimeter layer 216 of the warp fiber tows 210, which, particularly for the near net shape woven fabric 400, helps to retain all of the warp fiber tows 210 together, increasing delamination resistance.

In FIG. 5, the multi-layer weft fiber tow 410 is woven in a spiral pattern and the multi-layer portions 412 of the multi-layer weft fiber tow 410 are multi-layer turnaround portions, which is referred to herein as a multi-layer turnaround 416.

FIGS. 6A to 6G schematically illustrate the process of weaving the multi-layer weft fiber tow 410 in the spiral pattern. Six warp fiber layers 212 are depicted in FIGS. 6A to 6G and these layers are numbered for ease of reference in the following discussion from a first layer (starting at the top) to a sixth layer (bottom layer). One of the numbers one to six is appended to reference numeral 212 to indicate the layer in FIGS. 6A to 6G (e.g., a first warp fiber layer 2121, a second warp fiber layer 2122, etc.). Although the six warp fiber layers 212 are used to illustrate the weft fiber pattern, other numbers of layers may be used.

FIG. 6A is a first step. In the first step, the multi-layer weft fiber tow 410 is first directed in a mid-section of the woven fabric 400, such as midway through the thickness of the woven fabric 400 between two middle layers of the warp fiber layers 212. More specifically, the multi-layer weft fiber tow 410 is first directed in a positive weft direction Wf between a third warp fiber layer 2123 and a fourth warp fiber layer 2124.

FIG. 6B is a second step. In the second step, the multi-layer weft fiber tow 410 forms a turnaround, which, as depicted in FIG. 6B, is a single-layer turnaround 418, and, then, the multi-layer weft fiber tow 410 is directed in an opposite direction (e.g., the negative weft direction Wf) one layer higher between the second warp fiber layer 2122 and the third warp fiber layer 2123. The single-layer turnaround 418 is not formed at the end or the edge of the woven fabric 400 or the third warp fiber layer 2123. Instead, the single-layer turnaround 418 is located within the woven fabric 400, inward from the outer perimeter layer 216 (FIG. 5) of the warp fiber tows 210.

FIG. 6C is a third step. In the third step, the multi-layer weft fiber tow 410 forms a multi-layer turnaround 416 extending from between the second warp fiber layer 2122 and the third warp fiber layer 2123 to between the third warp fiber layer 2123 and the fourth warp fiber layer 2124. Then, the multi-layer weft fiber tow 410 is directed in the positive weft direction Wf two layers lower between the fourth warp fiber layer 2124 and the fifth warp fiber layer 2125. Here, again, and for all but the sixth step and the seventh step, the multi-layer turnaround 416 is located within the woven fabric 400.

FIG. 6D is a fourth step. In the fourth step, the multi-layer weft fiber tow 410 is directed three layers higher to between the second warp fiber layer 2122 and the first warp fiber layer 2121, forming another (i.e., a second) multi-layer turnaround 416. Then, the multi-layer weft fiber tow 410 is directed in the negative weft direction Wf between the second warp fiber layer 2122 and the first warp fiber layer 2121.

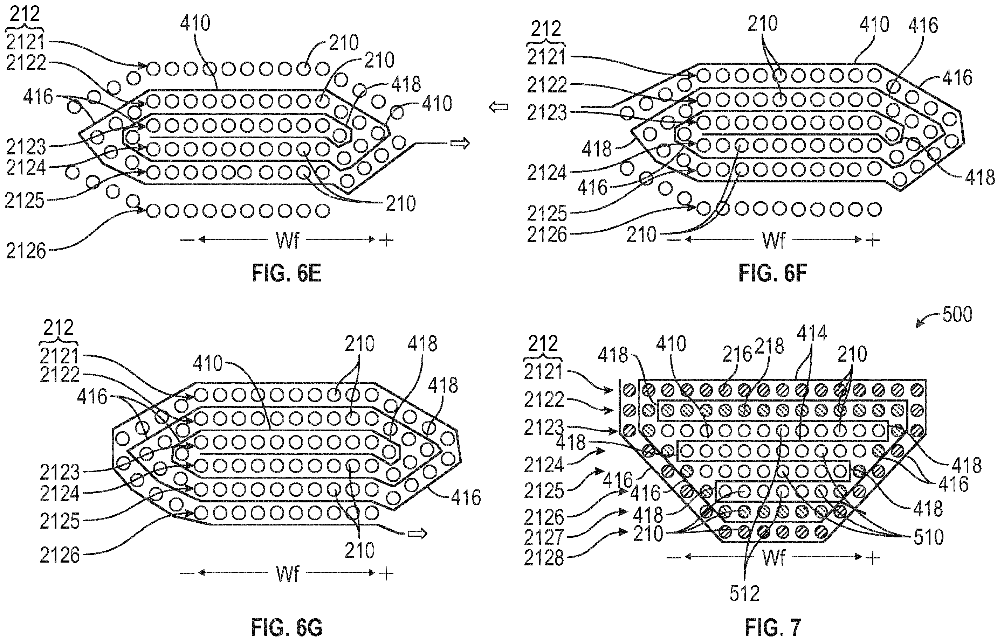

FIG. 6E is a fifth step. In the fifth step, the multi-layer weft fiber tow 410 is directed four layers lower to between a fifth warp fiber layer 2125 and a sixth warp fiber layer 2126, forming another (i.e., a third) multi-layer turnaround 416. Then, the multi-layer weft fiber tow 410 is directed in the positive weft direction Wf between the fifth warp fiber layer 2125 and the sixth warp fiber layer 2126.

FIG. 6F is a sixth step. In the sixth step, the multi-layer weft fiber tow 410 is directed five layers higher to above the first warp fiber layer 2121, forming another (i.e., a fourth) multi-layer turnaround 416. Unlike the previous turnarounds, this multi-layer turnaround 416 is formed on the exterior of the woven fabric 400. Then, the multi-layer weft fiber tow 410 is directed in the negative weft direction Wf on the exterior of the first warp fiber layer 2121.

FIG. 6G is a seventh step. In the seventh step, the multi-layer weft fiber tow 410 is directed six layers lower to below the sixth warp fiber layer 2126, forming another (i.e., a fifth) multi-layer turnaround 416. This multi-layer turnaround 416 also is formed on the exterior of the woven fabric 400. Then, the multi-layer weft fiber tow 410 is directed in the positive weft direction Wf on the exterior of the sixth warp fiber layer 2126. The combination of the sixth step and the seventh step results in the multi-layer weft fiber tow 410 circumscribing the outer perimeter layer 216 (FIG. 5) of warp fiber tows 210.

The multi-layer weft fiber tow 410, including multi-layer portion 412, may be woven in other weave patterns. FIGS. 7 to 9 illustrate some of these other fiber weave patterns for the multi-layer weft fiber tow 410. The woven fabrics and the fiber weave patterns discussed below are similar to the fiber weave pattern and the woven fabric 400 discussed in FIGS. 5 to 6G. The same reference numerals will be used for the same or similar features. The discussion above applies to these features and a detailed discussion of these features will be omitted from the following discussion. As with aspects shown in FIGS. 5 to 6G, the interlocking fiber tows 230 (FIGS. 2A to 2D) are omitted from FIGS. 7 to 9, for clarity.

FIG. 7 is a schematic view of a woven fabric 500 that may be used to form a composite component, such as the airfoil 300 (FIG. 3). As with the woven fabric 400 shown in FIG. 5, the multi-layer weft fiber tow 410 is woven to circumscribe the outer perimeter layer 216 in FIG. 7. The woven fabric 500 also includes an inner perimeter layer 218 of warp fiber tows 210. The inner perimeter layer 218 of the warp fiber tows 210 is located inward of the outer perimeter layer 216 of the warp fiber tows 210 and, more specifically, directly inward by one perimetrical (or coreferential) layer. The warp fiber tows 210 in the outer perimeter layer 216 are shown in FIG. 7 with solid-line cross-hatching. The warp fiber tows 210 in the inner perimeter layer 218 are shown in FIG. 7 with broken-line cross-hatching. Before forming the multi-layer turnarounds 416 and circumscribing the outer perimeter layer 216 and the inner perimeter layer 218, the multi-layer weft fiber tow 410 is woven in a single-layer alternating pattern including a plurality of single-layer turnarounds 418. The single-layer turnarounds 418 shown in FIG. 7 are located within the woven fabric 500, such as within the outer perimeter layer 216 and, more specifically, within the inner perimeter layer 218. The woven fabric 500, thus, includes inner warp fiber tows 512 that are the warp fiber tows 210 inward of the outer perimeter layer 216.

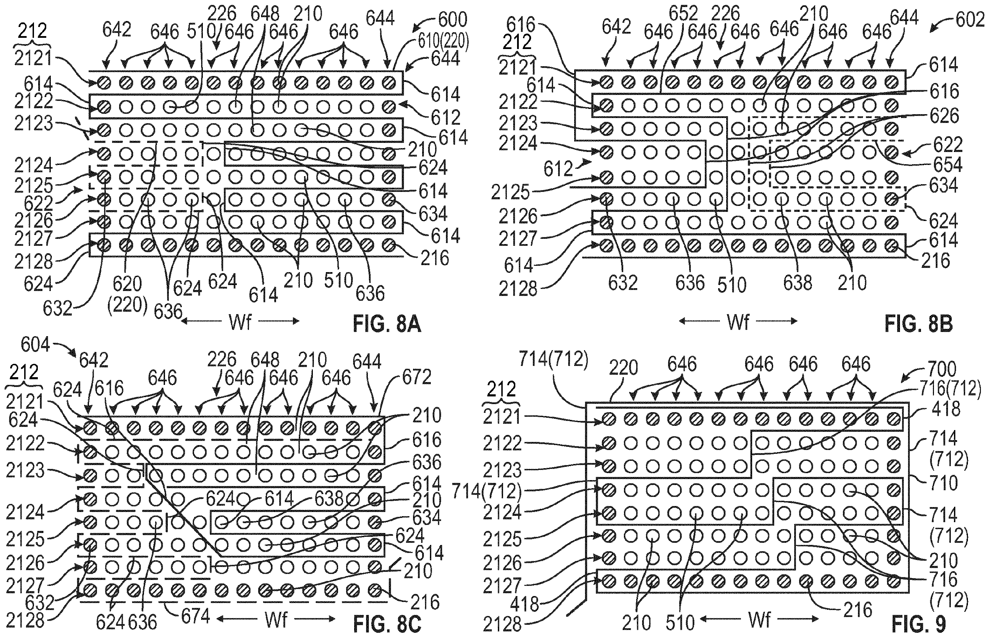

FIGS. 8A to 8C are schematic views of additional woven fabrics 600, 602, and 604 having alternate weft fiber weave patterns that may be used to form a composite component, such as the airfoil 300 (FIG. 3). As shown above in, for example, FIGS. 2A and 2B, the woven fabric 200 may include a plurality of weft fiber columns 226. Each weft fiber column 226 may include at least one weft fiber tow 220. Two or more, and, in some cases, each of the weft fiber tows 220 may be the multi-layer weft fiber tow 410 (FIGS. 5 to 7), and the woven fabric 200 may include a plurality of multi-layer weft fiber tows 410 using the fiber weave patterns discussed above or those discussed further below. FIGS. 8A to 8C depict fiber weave patterns for the weft fiber tows 220 that include two weft fiber tows 220 in one weft fiber column 226.

FIG. 8A is a schematic view of a woven fabric 600 that includes a plurality of weft fiber tows 220 in one of the weft fiber columns 226. As depicted in FIG. 8A, two weft fiber tows 220, a first weft fiber tow 610 and a second weft fiber tow 620, are woven within one of the weft fiber columns 226.

Each warp fiber layer 212 includes a first end warp fiber 632 located at one end of the woven fabric 600 in the weft direction Wf, a second end warp fiber 634 located at the other end of the woven fabric 600 in the weft direction Wf, and inner warp fibers 636 located between the first end warp fiber 632 and the second end warp fiber 634. Similarly, the woven fabric 600 includes a first end warp fiber column 642 located at one end of the woven fabric 600 in the weft direction Wf, a second end warp fiber column 644 located at the other end of the woven fabric 600 in the weft direction Wf, and inner warp fiber columns 646 located between the first end warp fiber column 642 and the second end warp fiber column 644. The warp fiber tows 210 in the first end warp fiber column 642 and the second end warp fiber column 644 may form part of the outer perimeter layer 216 and, thus, the warp fiber tows 210 in the inner warp fiber columns 646, with the exception of those in the uppermost warp fiber layer 212 (a first warp fiber layer 2121 in FIG. 8A) and the lower most warp fiber layer 212 (an eighth warp fiber layer 2128 in FIG. 8), are inner warp fiber tows 512 (FIG. 7), as discussed above. Additionally, the woven fabric 600 includes inner warp fiber layers 648. The inner warp fiber layers 648 are the warp fiber layers 212 between the uppermost warp fiber layer 212 (e.g., the first warp fiber layer 2121 in FIG. 8A) and the lower most warp fiber layer 212 (e.g., the eighth warp fiber layer 2128 in FIG. 8), which, as depicted in FIG. 8A is a second warp fiber layer 2122 through a seventh warp fiber layer 2127.

In the woven fabric 600 depicted in FIG. 8A, each of the first weft fiber tow 610 and the second weft fiber tow 620 is woven with a single-layer alternating pattern. The first weft fiber tow 610 includes at least one portion that extends the full width of the woven fabric 600 in the weft direction Wf, which may be adjacent to the uppermost warp fiber layer 212 (e.g., the first warp fiber layer 2121 in FIG. 8A) and the lower most warp fiber layer 212 (e.g., the eighth warp fiber layer 2128 in FIG. 8). The first weft fiber tow 610 also includes single-layer turnarounds 614 that are located within inner warp fiber tows 510. The single-layer turnarounds 614 are similar to the single-layer turnaround 418 (FIG. 5). The single-layer turnarounds 614 are located adjacent to at least one of the inner warp fiber tows 510 and may be located between inner warp fiber tows 510. The single-layer turnarounds 614 also are located adjacent to a warp fiber tow 210 of at least one of inner warp fiber columns 646 and may be located between warp fiber tows 210 of adjacent inner warp fiber columns 646. Each of the single-layer turnarounds 614 of the first weft fiber tow 610 may be located in one of the inner warp fiber layers 648.

With the first weft fiber tow 610 positioned as discussed above, the second weft fiber tow 620 may be woven in the same weft fiber column 226 as the first weft fiber tow 610 and woven within the inner warp fiber layers 648 in areas not occupied by the first weft fiber tow 610. The weft fiber column 226 may thus include a first weft fiber region 612, which is a region of the weft fiber column 226 interwoven with the first weft fiber tow 610, and a second weft fiber region 622, which is a region of the weft fiber column 226 interwoven with the second weft fiber tow 620. The first weft fiber region 612 and the second weft fiber region 622 may be positioned within the inner warp fiber layers 648. The second weft fiber tow 620 may be woven to have single-layer turnarounds 624 located within inner warp fiber tows 510 in a manner similar to the first weft fiber tow 610, as discussed above. As depicted in FIG. 8A, at least one of the single-layer turnarounds 614 of the first weft fiber tow 610 and the at least one of the single-layer turnarounds 624 of the second weft fiber tow 620 are located in the same warp fiber layer 212. Including these weft turnarounds within the inner warp fiber tows 510 increases the delamination resistance of the woven fabric 600.

FIG. 8B is a schematic view of a woven fabric 602 that also includes a plurality of weft fiber tows in one of the weft fiber columns 226, and, more specifically, the woven fabric 602 includes a first multi-layer weft fiber tow 652 and a second multi-layer weft fiber tow 654 woven within one of the weft fiber columns 226. The woven fabric 602 shown in FIG. 8B is similar to the woven fabric 600 discussed above with reference to FIG. 8A, but, instead of including only single-layer turnarounds 614, 624, each of the first multi-layer weft fiber tow 652 and the second multi-layer weft fiber tow 654 includes multi-layer turnarounds 616, 626, respectively. The multi-layer turnarounds 616 of the first multi-layer weft fiber tow 652 and the multi-layer turnarounds 626 of the second multi-layer weft fiber tow 654 are positioned within the inner warp fiber tows 510 in a manner similar to the single-layer turnarounds 614 and 624 discussed above with reference to FIG. 8A. The first multi-layer weft fiber tow 652 and the second multi-layer weft fiber tow 654 may be similar to the multi-layer weft fiber tow 410 (FIGS. 5 to 7) discussed above and each of the multi-layer turnarounds 616 and 626 also may be similar to the multi-layer turnaround 416 (FIGS. 5 to 7) discussed above.

FIG. 8C is a schematic view of a woven fabric 604 that also includes a plurality of weft fiber tows in one of the weft fiber columns 226, and, more specifically, the woven fabric 604 includes a first weft fiber tow 672 and a second weft fiber tow 674 woven within one of the weft fiber columns 226. The plurality of weft fiber tows 220 in one of the weft fiber columns 226 may have any number of different arrangements. As depicted in FIG. 8C, the first weft fiber tow 672 is a multi-layer weft fiber tow, similar to the other multi-layer weft fiber tows (e.g., the multi-layer weft fiber tow 410 (FIGS. 5 to 7)) discussed above, and the second weft fiber tow 674 is woven in a single-layer alternating pattern similar to the first weft fiber tow 610 or the second weft fiber tow 620 discussed above with reference to FIG. 8A. More specifically, in FIG. 8C, the first weft fiber tow 672 includes single-layer turnarounds 614 and a multi-layer turnaround 616. The multi-layer turnaround 616 of the first weft fiber tow 672 shown in FIG. 8C extends across a plurality of warp fiber columns 214 and, more specifically, a plurality of inner warp fiber columns 646. The second weft fiber tow 674 shown in FIG. 8C includes a plurality of single-layer turnarounds 624. In respective ones of the inner warp fiber layers 638, the second weft fiber tow 674 includes a single-layer turnaround 624 at a different distance from the first end warp fiber 632 (or the first end warp fiber column 642) into the inner warp fibers 636 (or the inner warp fiber columns 646).

FIG. 9 is a schematic view of a woven fabric 700 that may be used to form a composite component, such as the airfoil 300 (FIG. 3). The weft fiber tow 220 shown in FIG. 9 is a multi-layer weft fiber tow 710 including a plurality of multi-layer portions 712. In the woven fabrics discussed above, the multi-layer portions were multi-layer turnarounds. Here, some of the multi-layer portions 712 are multi-layer turnarounds 714, similar to the multi-layer turnaround 416, discussed above with reference to FIG. 5, for example, but other multi-layer portions 712 are not part of a turnaround, and are referred to herein as a multi-layer jog 716. In forming the multi-layer jog 716, the multi-layer weft fiber tow 710 continues to be woven in the same direction of travel after the multi-layer jog 716 as the multi-layer weft fiber tow 710 was being woven before the multi-layer jog 716. In FIG. 9, the multi-layer weft fiber tow 710 includes a plurality of multi-layer jogs 716. Each of the multi-layer jogs 716 is located within the inner warp fiber tows 510 and may be offset relative to each other between different inner warp fiber columns 646. Each multi-layer jog 716 shown in FIG. 9 is between two adjacent inner warp fiber columns 646, but, as with the multi-layer turnarounds discussed above, the multi-layer jog 716 may extend over a plurality of warp fiber columns, such as a plurality of the inner warp fiber columns 646.

The woven fabrics 400, 500, 600, 602, 604, and 700, and the methods of forming these woven fabrics 400, 500, 600, 602, 604, and 700 include weaving weft fiber tows 220 in patterns where the weft fiber tows 220 pass through a plurality of warp fiber layers 212. Weaving the woven fabric 400, 500, 600, 602, 604, and 700 in this way increases the interlaminar strength of the woven fabric 400, 500, 600, 602, 604, and 700.

Further aspects of the present disclosure are provided by the subject matter of the following clauses.

A method of manufacturing a woven fabric for a composite component for a turbine engine, the woven fabric including a plurality of reinforcing fiber tows woven together in a three-dimensional pattern such that the woven fabric has a warp direction, a weft direction, and a thickness direction, the plurality of reinforcing fiber tows including a plurality of warp fiber tows and a plurality of weft fiber tows, the method comprising arranging the plurality of warp fiber tows to extend in the warp direction, the plurality of warp fiber tows being arranged in the thickness direction to form a plurality of warp fiber layers and being arranged in the weft direction to form a plurality of warp fiber columns, and weaving the plurality of weft fiber tows with the plurality of warp fiber tows, the plurality of weft fiber tows including a multi-layer weft fiber tow, the multi-layer weft fiber tow being woven with a multi-layer portion that extends two or more warp fiber layers of the plurality of warp fiber layers.

A method of manufacturing a woven fabric for a composite component for a turbine engine. The woven fabric includes a plurality of reinforcing fiber tows woven together in a three-dimensional pattern such that the woven fabric has a warp direction, a weft direction, and a thickness direction. The plurality of reinforcing fiber tows includes a plurality of warp fiber tows and a plurality of weft fiber tows. The method includes arranging the plurality of warp fiber tows to extend in the warp direction. The plurality of warp fiber tows is arranged in the thickness direction to form a plurality of warp fiber layers and is arranged in the weft direction to form a plurality of warp fiber columns. The method also includes weaving the plurality of weft fiber tows with the plurality of warp fiber tows. The plurality of weft fiber tows is woven to form a plurality of weft fiber columns. At least one weft fiber column of the plurality of weft fiber columns includes a first weft fiber tow and a second weft fiber tow.

The method of any preceding clause, wherein the at least one weft fiber column includes a first weft fiber region and a second weft fiber region.

The method of any preceding clause, wherein the second weft fiber tow is woven in a single-layer alternating pattern.

The method of any preceding clause, wherein the outer perimeter layer of the warp fiber tows defines inner warp fiber tows positioned inward of the outer perimeter layer of warp fiber tows and wherein, in respective inner warp fiber layers, the second weft fiber tows include a single-layer turnaround at a different distance from a first end warp fiber into inner warp fibers.

The method of any preceding clause, wherein the first weft fiber tow is woven in a single-layer alternating pattern.

The method of any preceding clause, wherein the first weft fiber tow is a multi-layer weft fiber tow.

The method of any preceding clause, wherein the second weft fiber tow is a multi-layer weft fiber tow.

The method of any preceding clause, wherein weaving the plurality of weft fiber tows includes weaving the multi-layer weft fiber tow in a spiral pattern.

The method of any preceding clause, wherein the multi-layer portion is a multi-layer turnaround.

The method of any preceding clause, wherein the multi-layer portion extends two or more warp fiber columns of the plurality of warp fiber columns.

The method of any preceding clause, wherein the multi-layer portion is a first multi-layer portion, and the multi-layer weft fiber tow includes a plurality of multi-layer portions, the first multi-layer portion being one multi-layer portion of the plurality of multi-layer portions.

The method of any preceding clause, wherein the plurality of multi-layer portions include a second multi-layer portion, the second multi-layer portion being a multi-layer turnaround.

The method of any preceding clause, wherein the reinforcing fiber tows further include a plurality of interlocking fiber tows.

The method of the preceding clause, wherein the plurality of interlocking fiber tows extend in the warp direction.

The method of the preceding clause, wherein the interlocking fiber tows are woven in an orthogonal interlocking pattern.

The method of the preceding clause, wherein orthogonal interlocking pattern extends through the thickness of the woven fabric.

The method of any preceding clause, wherein the interlocking fiber tows are woven in an angle interlock pattern.

The method of the preceding clause, wherein angle interlock pattern extends through adjacent fiber layers in an alternating or a sinusoidal pattern to interlock these adjacent layers with each other.

The method of any preceding clause, wherein angle interlock pattern extends through more than two adjacent fiber layers.

The method of the preceding clause, wherein angle interlock pattern extends through the thickness of the woven fabric.

The method of any preceding clause, wherein the multi-layer weft fiber tow is woven with a single-layer turnaround.

The method of any preceding clause, wherein one warp fiber layer of the plurality of warp fiber layers includes a first end warp fiber located at one end of the woven fabric in the weft direction, a second end warp fiber located at the other end of the woven fabric in the weft direction, and inner warp fibers located between the first end warp fiber and the second end warp fiber, the single-layer turnaround being located adjacent to at least one of the inner warp fibers.

The method of any preceding clause, wherein the multi-layer weft fiber tow is one multi-layer weft fiber tow of a plurality multi-layer weft fiber tows.

The method of any preceding clause, wherein the plurality of multi-layer weft fiber tows is arranged in weft fiber columns arranged in the warp direction.

The method of any preceding clause, wherein at least one weft fiber column includes the multi-layer weft fiber tow and another weft fiber tow of the plurality of weft fiber tows.

The method of any preceding clause, wherein the other weft fiber tow includes another multi-layer weft fiber tow with a multi-layer portion that extends two or more warp fiber layers of the plurality of warp fiber layers.

The method of any preceding clause, wherein arranging the plurality of warp fiber tows includes forming an outer perimeter layer of warp fiber tows, and weaving the plurality of weft fiber tows including weaving the multi-layer weft fiber tow to circumscribe the outer perimeter layer of warp fiber tows.

The method of any preceding clause, wherein arranging the plurality of warp fiber tows includes forming an inner perimeter layer of warp fiber tows, the inner perimeter layer of warp fiber tows being located inward of the outer perimeter layer of warp fiber tows, and weaving the plurality of weft fiber tows includes weaving the multi-layer weft fiber tow to circumscribe the inner perimeter layer of warp fiber tows.

The method of any preceding clause, wherein the multi-layer weft fiber tow is woven with a single-layer turnaround within the outer perimeter layer of warp fiber tows.

The method of any preceding clause, wherein the single-layer turnaround is one single-layer turnaround of a plurality of single-layer turnarounds located within the outer perimeter layer of warp fiber tows.

The method of any preceding clause, wherein arranging the plurality of warp fiber tows includes forming an outer perimeter layer of warp fiber tows.

The method of the preceding clause, wherein the outer perimeter layer of warp fiber tows defines inner warp fiber tows positioned inward of the outer perimeter layer of warp fiber tows.

The method of any preceding clause, wherein the multi-layer portion is located within the inner warp fiber tows.

The method of any preceding clause, wherein the plurality of multi-layer portions is offset relative to each other between different inner warp fiber columns.

The method of any preceding clause, wherein the single-layer turnaround of the multi-layer weft fiber tow is located within the inner warp fiber tows.

The method of any preceding clause, wherein the multi-layer portion is a multi-layer jog.

The method of the preceding clause, wherein the multi-layer jog extends two or more warp fiber columns of the plurality of warp fiber columns.

The method of any preceding clause, wherein the multi-layer jog is located within the inner warp fiber tows.

The method of any preceding clause, wherein the plurality of multi-layer portions includes a second multi-layer portion parallel to the second multi-layer portion.

The method of any preceding clause, wherein the multi-layer weft fiber tow is one multi-layer weft fiber tow of a plurality multi-layer weft fiber tows.

The method of the preceding clause, wherein each weft fiber tow of the plurality of weft fiber tows is one weft fiber tow of the plurality multi-layer weft fiber tows.

The method of any preceding clause, wherein the multi-layer weft fiber tow is woven in a single-layer alternating pattern including a plurality of single-layer turnarounds.

The method of the preceding clause, wherein the single-layer turnarounds are located within the inner warp fiber tows.

A method of forming a composite component, the method comprising preparing a woven fabric using the method of any preceding clause, the plurality of reinforcing fiber tows including prepreg fiber tows to introduce a matrix material, preparing a preform using the woven fabric, and curing the preform including the matrix material to generate the composite component.

A method of forming a composite component, the method comprising preparing a woven fabric using the method of any preceding clause, preparing a preform using the woven fabric, injecting a matrix material into the preform to generate an infiltrated preform, and curing the infiltrated preform to generate the composite component.

The method of any preceding clause, wherein the composite component is an airfoil including a spanwise direction, and the method further comprises positioning the woven fabric with the warp direction extending in the spanwise direction.

A composite component for a turbine engine including a woven fabric. The woven fabric including a plurality of reinforcing fiber tows woven together in a three-dimensional pattern such that the woven fabric has a warp direction, a weft direction, and a thickness direction. The plurality of reinforcing fiber tows including a plurality of warp fiber tows and a plurality of weft fiber tows. The plurality of warp fiber tows to extend in the warp direction. The plurality of warp fiber tows is arranged in the thickness direction to form a plurality of warp fiber layers and is arranged in the weft direction to form a plurality of warp fiber columns. The plurality of weft fiber tows including a multi-layer weft fiber tow. The multi-layer weft fiber tow having a multi-layer portion that extends two or more warp fiber layers of the plurality of warp fiber layers.

The composite component of the preceding clause, wherein the multi-layer weft fiber tow is arranged a spiral pattern.

The composite component of any preceding clause, wherein the multi-layer portion is a multi-layer turnaround.

The composite component of any preceding clause, wherein the multi-layer portion extends two or more warp fiber columns of the plurality of warp fiber columns.

The composite component of any preceding clause, wherein the multi-layer portion is a first multi-layer portion, and the multi-layer weft fiber tow includes a plurality of multi-layer portions, the first multi-layer portion being one multi-layer portion of the plurality of multi-layer portions.

The composite component of the preceding clause, wherein the plurality of multi-layer portions includes a second multi-layer portion, the second multi-layer portion being a multi-layer turnaround.

The composite component of any preceding clause, wherein the reinforcing fiber tows further include a plurality of interlocking fiber tows.

The composite component of the preceding clause, wherein the plurality of interlocking fiber tows extend in the warp direction.

The composite component of any preceding clause, wherein the interlocking fiber tows are woven in an orthogonal interlocking pattern.

The composite component of any preceding clause, wherein orthogonal interlocking pattern extends through the thickness of the woven fabric.

The composite component of any preceding clause, wherein the interlocking fiber tows are woven in an angle interlock pattern.

The composite component of any preceding clause, wherein angle interlock pattern extends through adjacent fiber layers in an alternating or a sinusoidal pattern to interlock these adjacent layers with each other.

The composite component of any preceding clause, wherein angle interlock pattern extends through more than two adjacent fiber layers.

The composite component of any preceding clause, wherein angle interlock pattern extends through the thickness of the woven fabric.

The composite component of any preceding clause, wherein the multi-layer weft fiber tow includes a single-layer turnaround.

The composite component of the preceding clause, wherein one warp fiber layer of the plurality of warp fiber layers includes a first end warp fiber located at one end of the woven fabric in the weft direction, a second end warp fiber located at the other end of the woven fabric in the weft direction, and inner warp fibers located between the first end warp fiber and the second end warp fiber, the single-layer turnaround being located adjacent to at least one of the inner warp fibers.

The composite component of any preceding clause, wherein the multi-layer weft fiber tow is one multi-layer weft fiber tow of a plurality multi-layer weft fiber tows.

The composite component of the preceding clause, wherein at least one weft fiber column includes the multi-layer weft fiber tow and another weft fiber tow of the plurality of weft fiber tows.

The composite component of the preceding clause, wherein the other weft fiber tow is another multi-layer weft fiber tow with a multi-layer portion that extends two or more warp fiber layers of the plurality of warp fiber layers.

The composite component of any preceding clause, wherein the plurality of warp fiber tows has an outer perimeter layer of warp fiber tows, and the multi-layer weft fiber tow circumscribes the outer perimeter layer of warp fiber tows.

The composite component of the preceding clause, wherein the plurality of warp fiber tows includes an inner perimeter layer of warp fiber tows. The inner perimeter layer of warp fiber tows is located inward of the outer perimeter layer of warp fiber tows, and the multi-layer weft fiber tow circumscribes the inner perimeter layer of warp fiber tows.

The composite component of any preceding clause, wherein the multi-layer weft fiber tow includes a single-layer turnaround within the outer perimeter layer of warp fiber tows.

The composite component of the preceding clause, wherein the single-layer turnaround is one single-layer turnaround of a plurality of single-layer turnarounds located within the outer perimeter layer of warp fiber tows.

The composite component of any preceding clause, wherein the composite component is an airfoil.

The composite component of any preceding clause, wherein airfoil the includes a spanwise direction, the warp direction extending in the spanwise direction.

Although the foregoing description is directed to certain embodiments, other variations and modifications will be apparent to those skilled in the art and may be made without departing from the disclosure. Moreover, features described in connection with one embodiment may be used in conjunction with other embodiments, even if not explicitly stated above.

## Claims

1. A method of manufacturing a woven fabric (400, 500, 602, 604, 700) for a composite component for a turbine engine (100), the woven fabric (400, 500, 602, 604, 700) including a plurality of reinforcing fiber tows (202) woven together in a three-dimensional pattern such that the woven fabric (400, 500, 602, 604, 700) has a warp direction, a weft direction, and a thickness direction, the plurality of reinforcing fiber tows (202) including a plurality of warp fiber tows (210) and a plurality of weft fiber tows (220), the method comprising:
arranging the plurality of warp fiber tows (210) to extend in the warp direction, the plurality of warp fiber tows (210) being arranged in the thickness direction to form a plurality of warp fiber layers (212) and being arranged in the weft direction to form a plurality of warp fiber columns (214); and
weaving the plurality of weft fiber tows (220) with the plurality of warp fiber tows (210), the plurality of weft fiber tows (220) including a multi-layer weft fiber tow (410, 652, 654, 674, 710), the multi-layer weft fiber tow (410, 652, 654, 674, 710) being woven with a multi-layer portion (412, 416, 612, 616, 626, 712, 714, 716) that extends two or more warp fiber layers (212) of the plurality of warp fiber layers (212).

2. The method of claim 1, wherein the plurality of reinforcing fiber tows (202) further includes a plurality of interlocking fiber tows (230), and
wherein preferably the plurality of interlocking fiber tows (230) extends in the warp direction.

3. The method of claim 1 or 2, wherein weaving the plurality of weft fiber tows (220) includes weaving the multi-layer weft fiber tow (410) in a spiral pattern.

4. The method of any one of claims 1 to 3, wherein the multi-layer portion (416, 616, 626, 714) is a multi-layer turnaround (416, 616, 626, 714), and/or
wherein the multi-layer portion (412, 416, 612, 616, 626, 712, 714, 716) extends two or more warp fiber columns (214) of the plurality of warp fiber columns (214).

5. The method of any one of claims 1 to 4, wherein the multi-layer portion (412, 616, 626, 712) is a first multi-layer portion (412, 416, 612, 616, 626, 712, 714, 716), and the multi-layer weft fiber tow (412, 416, 612, 616, 626, 712, 714, 716) includes a plurality of multi-layer portions (412, 416, 612, 616, 626, 712, 714, 716), the first multi-layer portion (412, 416, 612, 616, 626, 712, 714, 716) being one multi-layer portion (412, 416, 612, 616, 626, 712, 714, 716) of the plurality of multi-layer portions (412, 416, 612, 616, 626, 712, 714, 716).

6. The method of claim 5, wherein the plurality of multi-layer portions (416, 616, 626, 714) includes a second multi-layer portion (416, 616, 626, 714), the second multi-layer portion (416, 616, 626, 714) being a multi-layer turnaround (416, 616, 626, 714).

7. The method of any one of claims 1 to 6, wherein the multi-layer weft fiber tow (410, 652, 654, 674) is woven with a single-layer turnaround (418, 614, 624).

8. The method of claim 7, wherein one warp fiber layer (212) of the plurality of warp fiber layers (212) includes a first end warp fiber (632) located at one end of the woven fabric (602, 604) in the weft direction, a second end warp fiber (634) located at the other end of the woven fabric (602, 604) in the weft direction, and inner warp fibers (636) located between the first end warp fiber (632) and the second end warp fiber (634), the single-layer turnaround (614, 624) being located adjacent to at least one of the inner warp fibers (636).

9. The method of any one of claims 1 to 8, wherein the multi-layer weft fiber tow (652, 654, 674) is one multi-layer weft fiber tow (652, 654, 674) of a plurality multi-layer weft fiber tows (652, 654, 674).

10. The method of claim 9, wherein the plurality of multi-layer weft fiber tows (652, 654, 674) are arranged in weft fiber columns (226) arranged in the warp direction.

11. The method of claim 10, wherein at least one weft fiber column (226) includes the multi-layer weft fiber tow (652, 654, 674) and another weft fiber tow (652, 654, 672, 674) of the plurality of weft fiber tows (220).

12. The method of claim 11, wherein the other weft fiber tow (652, 654) is another multi-layer weft fiber tow (652, 654) with a multi-layer portion (626) that extends two or more warp fiber layers (212) of the plurality of warp fiber layers (212).

13. The method of any one of claims 1 to 12, wherein arranging the plurality of warp fiber tows (210) includes forming an outer perimeter layer (216) of warp fiber tows (210), and
wherein weaving the plurality of weft fiber tows (220) includes weaving the multi-layer weft fiber tow (410, 710) to circumscribe the outer perimeter layer (216) of warp fiber tows (210).

14. The method of claim 13, wherein arranging the plurality of warp fiber tows (210) includes forming an inner perimeter layer (218) of warp fiber tows (210), the inner perimeter layer (218) of warp fiber tows (210) being located inward of the outer perimeter layer (216) of warp fiber tows (210), and weaving the plurality of weft fiber tows (220) includes weaving the multi-layer weft fiber tow (410) to circumscribe the inner perimeter layer (218) of warp fiber tows (210),
wherein the multi-layer weft fiber tow (410) is woven with a single-layer turnaround (418) within the outer perimeter layer (216) of warp fiber tows (210), and/or
wherein the multi-layer weft fiber tow (410) is woven with a plurality of single-layer turnarounds (418) located within the outer perimeter layer (216) of warp fiber tows (210).

15. A method of forming a composite component, the method comprising:
preparing a woven fabric (400, 500, 602, 604, 700) using the method of any one of claims 1 to 14,
preparing a preform using the woven fabric;
introducing a matrix material within the preform; and
curing the preform including the matrix material to generate the composite component,
wherein the plurality of reinforcing fiber tows (202) includes prepreg fiber tows to introduce the matrix material, or
wherein introducing the matrix material into the preform includes injecting the matrix material into the preform to generate an infiltrated preform and curing the preform includes curing the infiltrated preform.
